# EUROPÄISCHE PATENTSCHRIFT

(11) **EP 0 506 713 B1**
(45) Veröffentlichungstag und Bekanntmachung des Hinweises auf die Patenterteilung: **09.02.1994**
(21) Anmeldenummer: 91900664.3
(22) Anmeldetag: 14.12.1990
(51) Int. Cl.: G07D 7/00, G09B 21/00

(54) **VORRICHTUNG ZUR KLASSIFIZIERUNG VON BANKNOTEN U.DGL.**
DEVICE FOR CLASSIFYING BANK NOTES AND THE LIKE
DISPOSITIF DE CLASSEMENT DE BILLETS DE BANQUE ET SIMILAIRE

(30) Priorität: 20.12.1989 AT 2895/89
(43) Veröffentlichungstag der Anmeldung: 07.10.1992
(73) Patentinhaber: CARE TEC GMBH, A-1010 Wien (AT)
(72) Erfinder: LITSCHEL, Dietmar, A-3400 Klosterneuburg (AT)
(74) Vertreter: Kliment, Peter, Dipl.-Ing.
(86) Internationale Anmeldenummer: AT9000123
(87) Internationale Veröffentlichungsnummer: WO9109380

(56) Entgegenhaltungen:
- FR-A- 2 410 855
- US-A- 3 725 667
- US-A- 3 906 449
- US-A- 4 187 463
- US-A- 4 355 300
- US-A- 4 563 771

## Beschreibung

Die Erfindung betrifft eine Vorrichtung zur Klassifizierung von Banknoten und anderen Blättern aus Papier, Kunststoff, Metall, od. dgl. mit mindestens zwei zueinander parallelen Kanten, bei welcher Vorrichtung ein Anschlag für eine der beiden Kanten des zu klassifizierenden Blattes vorgesehen und Anzeige- und Meßeinrichtungen zur Ermittlung des Abstandes zur anderen der gegenüberliegenden parallelen Kanten vorhanden sind.

Die Geldscheine der meisten Währungssysteme unterscheiden sich je nach ihrem Wert geringfügig in ihren Abmessungen. Diese Tatsache kann dazu ausgenützt werden, blinden oder sehbehinderten Personen das Erkennen von Geldscheinen mittels des Tastsinnes zu ermöglichen.

Es sind schablonenförmige Lehren bekannt auf die eine Banknote flach aufgelegt wird, sodaß man anhand von Markierungen die Länge oder Breite der Banknote bestimmen kann. Eine solche Lehre muß in ihrer Größe der größten zu bestimmenden Banknote entsprechen. Daher sind solche Geräte für den praktischen Einsatz schlecht geeignet.

Weiters ist eine Vorrichtung bekannt, mit der insbesonders die Breite von Banknoten unter Einsatz des Tastsinns der Finger erkannt werden kann. Die Vorrichtung besteht aus einem Stift der einen Anschlag und verschiedene Markierungen aufweist. Ungünstigerweise unterscheiden sich jedoch die Breiten der Banknoten bei vielen Währungen nur unwesentlich voneinander und es kommt des öfteren vor, daß zwei unterschiedliche Banknoten der selben Währung die gleiche Breite aufweisen, sodaß mit Hilfe dieses Stiftes keine Unterscheidung getroffen werden kann. Es ist nun prinzipiell möglich den Stift solange auszuführen, daß man auch die Länge der Banknoten abmessen kann. Dadurch wird diese Vorrichtung jedoch für den praktischen Gebrauch unhandlich, sodaß sie nur eingeschränkt verwendbar ist.

Aufgabe der Erfindung ist es, diese Nachteile zu vermeiden und eine Vorrichtung zu schaffen, die sowohl klein, handlich, zuverlässig als auch leicht in der Handhabung ist und sich mit anderen wichtigen Funktionen kombinieren läßt.

Erfindungsgemäß wird dies dadurch erreicht, daß die Vorrichtung aus mindestens einem blattförmigen Körper besteht, der eine zum Anschlag parallele Biegekante aufweist, um die das Blatt umgeschlagen werden kann.

Dadurch kann das zu prüfende Blatt an den Anschlag angelegt und über die Biegekante gebogen werden. Die Länge des umgeschlagenen Abschnittes kommt dann in den Bereich der Anzeige- und Meßeinrichtungen zu liegen, wodurch der Abstand der Kante des zu prüfenden Blattes von der der Biegekante gegenüberliegenden Kante der Vorrichtung erfaßt werden kann. Damit ist die Länge des zu prüfenden Blattes leicht erfaßbar, die für die Klassifizierung wesentlich ist.

Weiters kann vorgesehen sein, daß zwei Körper vorhanden sind, die entlang eines parallel zur Biegekante eines der beiden Körper verlaufenden Gelenkes miteinander verbunden sind, das gleichzeitig den Anschlag bildet und die beiden Körper in der Gebrauchsstellung eine Spalt begrenzen.

Jene Kante die sich an der Öffnung des Spaltes zwischen den beiden Körpern der Vorrichtung gegenüber der Biegekante befindet, wird im nachfolgenden als Nichtbiegekante bezeichnet. Prinzipiell kann auch diese Kante, sofern sie parallel zum Gelenk, das als Falzkante ausgebildet sein kann, verläuft, als zusätzliche Biegekante verwendet werden, was in einigen der vorgesehenen Versionen auch der Fall ist.

Die zu beurteilende Banknote wird der Länge nach in den Spalt zwischen den beiden blattförmigen Körpern eingeführt, bis die Kante ihrer Breitseite an der Innenseite des Gelenkes satt anliegt. Der aus dem Spalt herausstehende Teil der Banknote wird sodann um die Biegekante umgebogen und eng an den Körper, der die Biegekante aufweist, angedrückt. Die um die Biegekante gebogene Banknote gelangt dabei in den Bereich der Anzeige und Meßeinrichtungen, in dem sich Markierungsfelder befinden. Innerhalb der Markierungsfelder gibt es außerdem Beschriftungen. Sowohl die Markierungsfelder als auch die Beschriftungen dienen dazu, die Ermittlung der Größe der jeweiligen Banknote auf visuelle und taktile Art zu ermöglichen.

Beim Meßvorgang stellt der Anwender visuell oder taktil fest, wie weit die zu klassifizierende Banknote in den Bereich der Anzeige- und Meßeinrichtungen, innerhalb der sich die Markierungsfelder und/oder die Beschriftungen befinden, hinein reicht: er stellt fest, welches erstes Markierungsfeld und/oder welche erste Beschriftung von der Kante der eingelegten Banknote nicht mehr oder gerade noch nicht abgedeckt wurde. Dieser Vorgang ist primär für die Messung der Länge der Banknote vorgesehen, obwohl prinzipiell auf diese Weise auch die Breite gemessen werden kann. Die Messung der Länge der Banknote bietet jedoch den Vorteil der leichteren Erkennbarkeit, da in den meisten Währungssystemen die Längen der Banknoten stärker variieren als die Breiten. Aufgrund der ermittelten Größe der Banknote kann auf deren Wert geschlossen werden.

Eine gegebene Vorrichtung kann entweder nur Markierungsfelder, nur Beschriftungen oder sowohl Markierungsfelder als auch Beschriftungen aufweisen.

Nach einem weiteren Merkmal der Erfindung kann auch vorgesehen sein, daß die Meßeinrichtungen durch Sensoren gebildet sind, die mit einer Auswerteschaltung verbunden sind, die eine akustische Anzeige steuert.

Auf diese Weise läßt sich die Größe z.B. einer Banknote, und damit deren Wert zu einer akustischen Anzeige bringen, wobei unterschiedliche Banknoten durch unterschiedliche akustische Signale angezeigt werden, z.B. durch unterschiedliche Frequenzen oder unterschiedliche Frequenzfolgen.

Dabei kann weiters vorgesehen sein, daß es sich bei den Sensoren um lichtempfindliche Sensoren handelt, die in einem von der zu prüfenden Banknote od. dgl. überdeckbaren Bereich angeordnet sind.

Dadurch ist es auf einfache Weise möglich die Größe der Banknote zu erfassen, wobei es lediglich notwendig ist, den durch die Banknote od. dgl. teilweise abgedeckten Bereich der Anzeige- und Meßeinrichtungen einer Lichtquelle zuzukehren.

Weiters kann auch vorgesehen sein, daß es sich bei den Sensoren um druckempfindliche Sensoren handelt, die vorzugsweise auf größere Drücke ansprechen und in Form schmaler Streifen im von der zu prüfenden Banknote od. dgl. überdeckbaren Bereich angeordnet sind.

Auf diese Weise ist es möglich den Rand der umgebogenen Banknote od. dgl. zu ertasten und entlang deren Randes mit einem Fingernagel kräftig entlang zu streichen. Damit lassen sich entsprechende Drücke auf den entsprechenden Sensor ausüben, sodaß dieser ein ausreichend starkes Signal abgibt, das weiter verarbeitet werden kann und eine akustische Signalgabe bewirkt. Bei dieser Lösung können z.B. piezoelektrische Sensoren vorgesehen werden.

Weiters kann vorgesehen sein, daß mehrere Anschläge, sowie mehrere Biegekanten vorhanden sind.

Dies ermöglicht die Unterscheidung einer entsprechend großen Vielzahl verschiedener Blätter, insbesondere Banknoten verschiedener Währungen, wobei jede Biegekante für eine bestimmte Währung vorgesehen ist.

Weiters kann vorgesehen sein, daß sich auf der Außenseite jenes Körpers, auf dem sich zur Klassifizierung der jeweiligen Banknote eine korrespondierende Biegekante befindet, Markierungsfelder und/oder Beschriftungen angeordnet sind, wobei sich vorzugsweise der Bereich der Anzeige- und Meßeinrichtungen über das Gelenk hinweg auch auf die Rückseite der Vorrichtung erstreckt.

Damit können auch sehr große Banknoten mit kleinen und handlichen Vorrichtungen erkannt werden.

Insbesonders ist es günstig, wenn die Anzeige- und Meßeinrichtungen quer über die gesamte Breite des Körpers und parallel zur Biegekante verlaufen. Da sich auch die jeweilige Banknote, ob breit oder längsseitig, über die gesamte Breite des Körpers erstreckt, sind Rückschlüsse auf die Banknotengröße selbst dann noch möglich, wenn diese infolge Abnützung an den Rändern oder Ecken teilweise ausgefranst oder eingerissen sind.

Nach einem weiteren Merkmal der Erfindung kann vorgesehen sein, daß die Markierungsfelder sowohl eine mit dem Niveau der Außenseite des Körpers korrespondierende (glatte) Oberfläche wie auch eine von diesem abweichende, durch Erhebungen und Einkerbungen gekennzeichnete Oberfläche aufweisen kann und die Markierungsfelder wie auch die Beschriftungen parallel zur Biegekante, wie auch zum Gelenk verlaufen.

Variiert das Niveau der Markierungsfelder, so weisen die sich parallel zur Biegekante und zum Gelenk erstreckenden Begrenzungen der Markierungsfelder, Einkerbungen und Erhebungen, mit entsprechenden Kanten und Fugen, auf, die taktil besonders leicht wahrgenommen werden können.

Weiters kann vorgesehen sein, daß sich auf der Außenkante des einen oder beider Körper innerhalb, wie auch außerhalb des Bereiches der Anzeige- und Meßeinrichtungen, eine oder mehrere Meßkanten mit Erhebungen und Einkerbungen befinden.

Durch die an den Seitenrändern der Körper angebrachten Meßkanten, läßt sich die Lage der Kante der zu prüfenden Banknote besonders leicht mit einem vorgegebene Maß vergleich und kann so auch von weniger geübten Personen sicher erkannt werden. Die Meßkanten können dabei Teile verschieden geformter Einkerbungen mit z.B. dreieckiger, kreissegmentförmiger, rechteckiger oder trapezförmiger Gestalt darstellen.

Weiters kann vorgesehen sein, daß sich in den Markierungsfeldern Beschriftungen in erhaben dargestellter normaler oder abgekürzter Brailleschrift, in erhaben oder versenkt dargestellten Symbolen und in gedruckter Form befinden, wobei sowohl die Markierungsfelder wie auch die Beschriftungen in unterschiedlichen Farben ausgeführt sein können.

Damit kann der Wert einer Banknote auf einfache Weise in einer taktil erfaßbaren Form angegeben werden.

Besonders günstig ist es, wenn im Bereich des Gelenkes eine Ausnehmung angeordnet ist, die eine taktile oder visuelle Kontrolle des ordnungsgemäßen Anliegens einer der beiden parallelen Kanten des zu klassifizierenden Blattes an der Innenseite des Gelenkes, das als Anschlag dient, erlaubt.

Auf diese Weise wird die Sicherheit und die Genauigkeit der Größenbestimmung des Blattes, z.B. einer Banknote stark erhöht, da der Anwender beispielsweise mit dem Daumen die Banknote bis zur Innenseite des Gelenkes ziehen kann. Werden mehrere Gelenke als Anschläge verwendet, können auch entsprechend viele Ausnehmungen vorgesehen sein.

Weiters kann vorgesehen sein, daß im Bereich der Ausnehmung ein lichtempfindlicher Sensor angebracht ist, der mit der Auswerteschaltung verbunden ist und eine akustische Anzeige steuert, die die korrekte Lage des Blattes an dem Anschlag anzeigt.

Als besonders praktisch in der Anwendung hat sich herausgestellt, wenn entweder der jeweils größere der beiden Körper oder aber die Vorrichtung insgesamt im wesentlichen die Größe bzw. die Umrisse von standardmäßigen Scheckkarten aufweist. Dieses Format hat sich als überaus gängige Abmessung für kleine Gebrauchsgegenstände herausgestellt.

Neben Kreditkarten und diversen Mitgliedskarten werden Taschenrechner, Notizblöcke und dgl. in diesem Format häufig angeboten. Eine diesem Standard angepaßte Vorrichtung hat deshalb einen hohen Gebrauchswert.

Weiters kann es vorteilhaft sein, wenn der Abstand zwischen dem oder einem der Gelenk(e) zur Biegekante 4 oder aber zu einer Nichtbiegekante genau der halben Länge oder der Breite einer bestimmten Banknote entspricht.

Auf diese Weise deckt sich die Kante der Banknote nach dem Umbiegen um die Biegekante genau mit der Außenseite des Gelenkes. In der Praxis wird dies bei der größten Banknote mit dem höchsten Wert der Fall sein. Es ist allerdings auch möglich, den Abstand des Gelenkes von der Biegekante auf die Länge einer anderen Banknote abzustimmen, wobei die längste Banknote dann daran erkannt wird, daß sie nach dem Umbiegen um die Biegekante am weitesten über die Außenseite des Gelenkes hinaus vorsteht. Sofern ein Währungssystem mehrere Banknoten verwendet, die über das Gelenk hinausragen, bietet sich eine Lösung an, bei der das Format der Vorrichtung, unter Verzicht auf Verwendung einer standardisierten Scheckkartengröße, verlängert wird. Eine andere Möglichkeit besteht darin, den Bereich der Anzeige- und Meßeinrichtungen der Vorderseite auf der Rückseite fortzusetzen, sodaß die zu klassifizierende Banknote um die Außenseite des Gelenkes, die nunmehr als zweite Biegekante fungiert, umgeschlagen wird.

Um überdimensionierter Banknoten mit einer scheckkartengroßen Vorrichtung klassifizieren zu können, bietet sich als weitere Möglichkeit an, mehrere Gelenke vorzusehen.

In diesem Falle kann auch eine der Innenseiten der Gelenke ausschließlich dazu dienen, das Falten der Vorrichtung auf Scheckkartenformat zu ermöglichen, sodaß sie als Anschlagskante keine Verwendung findet. Bei dem oder den restlichen Gelenk(en), das bzw. die als Falzkanten ausgebildet sein können und als Anschlagskanten dienen, können sich in diesem Falle wieder Ausnehmungen befinden, die der Kontrolle des ordentlichen Anliegens der zu klassifizierenden Banknote dienen. Prinzipiell besteht die Möglichkeit, die Banknoten je nach deren Längen an den Innenseiten unterschiedlicher Gelenke anzulegen, sie aber dennoch über eine einheitliche Biegekante zu wenden. Dies ist insbesonders dann vorteilhaft, wenn gewisse Längen von Banknoten sehr wenig im Umlauf sind und entsprechend selten klassifiziert werden müssen.

Weiters kann vorgesehen sein, daß der Abstand zwischen der Innenseite eines Gelenkes und der Biegekante oder der Abstand zwischen der Innenseite des Gelenkes und der Nichtbiegekante genau der vollen Breite einer bestimmten Banknote entspricht.

Diese Maßnahme ermöglicht ein höheres Maß an Sicherheit bei der Erkennung von Banknoten, falls der Anwender bei der Längenbestimmung unsicher ist. Dies ist besonders bei Währungen von Vorteil deren Banknoten sich in ihrer Länge nur wenig unterscheiden, aber Breitenunterschiede aufweisen.

Die Erfindung wird nun anhand der Zeichnung näher erläutert. Dabei zeigen:

Fig. 1 eine Ansicht der erfindungsgemäßen Vorrichtung von vorne.

Fig. 2 die Ansicht der Vorrichtung von hinten,

Fig. 3 aus der Seitenansicht einige der möglichen Varianten der Vorrichtung in ihrer Längendimension,

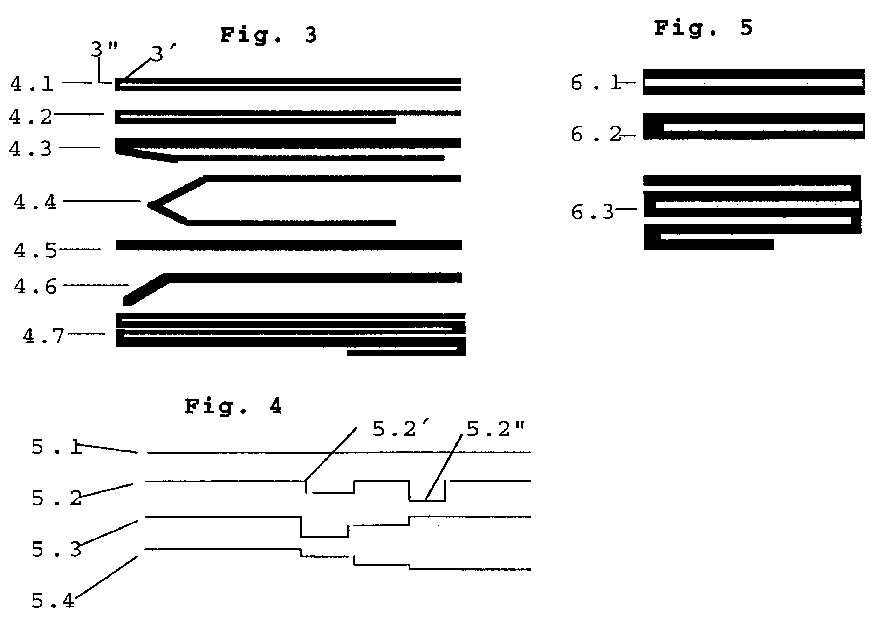

Fig. 4 aus der Seitenansicht einige der verschiedenen Varianten des Niveaus der Meßfelder des Bereiches der Anzeige- und Meßeinrichtungen,

Fig. 5 einige der möglichen Varianten der Vorrichtung in ihren Breitendimensionen aus der Sicht von oben.

Die erfindungsgemäße Vorrichtung besteht aus zwei Körpern 1, 2 aus Kunststoff oder anderen Stoffen. In einer Einfachversion besteht sie aus einem einzigen Körper und in erweiterten Versionen aus mehr als zwei Körpern. Der äußere Umriß der Vorrichtung, bestehend aus den übereinanderliegenden Körpern 1, 2 und anderen, weist üblicherweise eine rechteckige Form, mit oder ohne gerundeten Ecken, auf. Entlang einer Breitseite der Vorrichtung sind die beiden Körper 1, 2 durch ein Gelenk 3 verbunden, wobei zwischen der Innenseite 3' des Gelenkes 3 und dessen Außenseite 3" zu unterscheiden ist. Die andere Breitseite des Körpers 1 stellt die Biegekante 4 und die des Körpers 2 die Nichtbiegekante 4' dar. Die Körper 1 und 2 können jeweils auf einer der beiden Längsseiten der Vorrichtung 13' oder 13" miteinander verbunden sein, wobei in diesem Falle die jeweilige Ecke zum durch eine Falzkante gebildeten Gelenk 3 hin nicht abgerundet sondern eckig 14' oder 14" ist. Der Körper 2 weist eine Ausnehmung 10 zur besseren Kontrolle der eingelegten Banknote auf. Falls gleichzeitig auch eine Breitenmessung der Banknote erfolgen soll, so kann auch noch eine weitere zum Rand 13' oder 13" hin offene Ausnehmung (nicht dargestellt) vorgesehen sein, die ein glattes Anlegen der Banknote an den Längsrand 13', 13" erleichtert, wobei die jeweils andere Kante als Biegekante dient und an der Außenseite des entsprechenden Körpers Anzeige- und Meßeinrichtungen zur Erfassung der Breite der Banknote angeordnet sind, die im wesentlichen parallel zu dieser Biegekante ausgerichtet sind.

Auf der Außenseite des Körpers 1 befindet sich ein Bereich 5 mit Anzeige- und Meßeinrichtungen, der sich auch auf der Rückseite der Vorrichtung fortsetzen kann. Bei der dargestellten Ausführungsform weist der Bereich 5 Markierungsfelder 6 auf, die parallel zum Gelenk 3 und der Biegekante 4 verlaufen. Die Außenseite weist mit dem Bereich 5 entweder ein einheitliches Niveau 5.1 oder ein unterschiedliches Niveau 5.2, 5.3, 5.4 o.ä. auf. Weist der Bereich 5 bzw. die Markierungsfelder 6 ein unterschiedliches Niveau 5.2, 5.3, 5.4 auf, so haben die Markierungsfelder 6 an ihrer Begrenzung, die parallel zum Gelenk 3 und der Biegekante 4 verläuft, Kanten oder Fugen 5.2', 5.2". An einer der beiden längsseitigen Außenkanten des Bereiches 5 befindet sich die erste Meßkante 7 in deren Bereich verschiedenartig geformte Erhebungen und Einkerbungen angeordnet sind, die sich auch über die korrespondierende Außenkante des zweiten Körpers 2 erstrecken kann. In den Markierungsfeldern 6 befinden sich Beschriftungen 8, die aus erhaben dargestellten Braillepunkten, aus erhaben oder vertieft dargestellten Symbolen und gedruckten Zeichen (Zahlen oder Buchstaben) bestehen können. Zur besseren visuellen Unterscheidung sind die Markierungsfelder 6, die dargestellten Symbole und gedruckten Zeichen in unterschiedlichen Farben ausgeführt. An der Außenseite eines oder beider Körper 1, 2 befindet sich gegen die Biegekante 4 hin und außerhalb des Bereiches 5 der Markierungsfelder 6 die zweite Meßkante 9, in deren Bereich ebenfalls Erhebungen und Einkerbungen angeordnet sind, welche Meßkante 9 insbesondere zur Breitenmessung von Banknoten vorgesehen ist. Die Breitenmessung der Banknote erfolgt vom Prinzip her analog der Längenmessung. Die Abstände zwischen den Markierungsfeldern 6, in denen sich die Beschriftungen 8 befinden, bestimmen sich aus der Länge der Banknoten einer bestimmten Währung.

Die jeweilige Banknote schlägt mit einer ihrer Kanten an der Innenseite 3' des Gelenkes 3 satt an und erstreckt sich im gestreckten Zustand parallel zur Längsseite der Vorrichtung bis zur Biegekante 4. An der Biegekante 4 wird die Banknote umgeschlagen und erstreckt sich nunmehr entlang der vorderen Außenseite der Vorrichtung in den Bereich 5 der Markierungsfelder 6. Jenes Markierungsfeld und/oder jene Beschriftung die von der Kante der eingelegten Banknote nicht mehr oder gerade noch nicht abgedeckt wird, geben dem Anwender visuell und/oder taktil Auskunft über die Größe der Banknote bzw. geben ihm den Wert derselben auf taktile oder visuelle Art bekannt. Reichen die Informationen der Markierungsfelder 6 und der Beschriftungen 8 nicht aus, um die Größe der Banknote eindeutig feststellen zu können, können die Erhebungen und Einbuchtungen im Bereich der ersten Meßkante 7 zum Erreichen zusätzlicher Informationen über die Länge (oder Breite) der jeweiligen Banknote herangezogen werden. Bestehen selbst dann noch Unsicherheiten über die Größe der Banknote, kann zusätzlich eine Breitenmessung unter Einsatz der Meßkante 9 vorgenommen werden.

Im Bereich der Ausnehmung 10 des einen Körpers kann auf der Innenseite des anderen Körpers ein lichtempfindlicher Sensor 15 angeordnet sein, der die Lage der eingelegten Banknote od. dgl. im Hinblick auf ein sattes Anliegen an der Innenseite des Gelenkes 3 überwacht und mit einer Auswerteschaltung (nicht dargestellt) verbunden ist, die einen ebenfalls nicht dargestellten Schallgeber ansteuert.

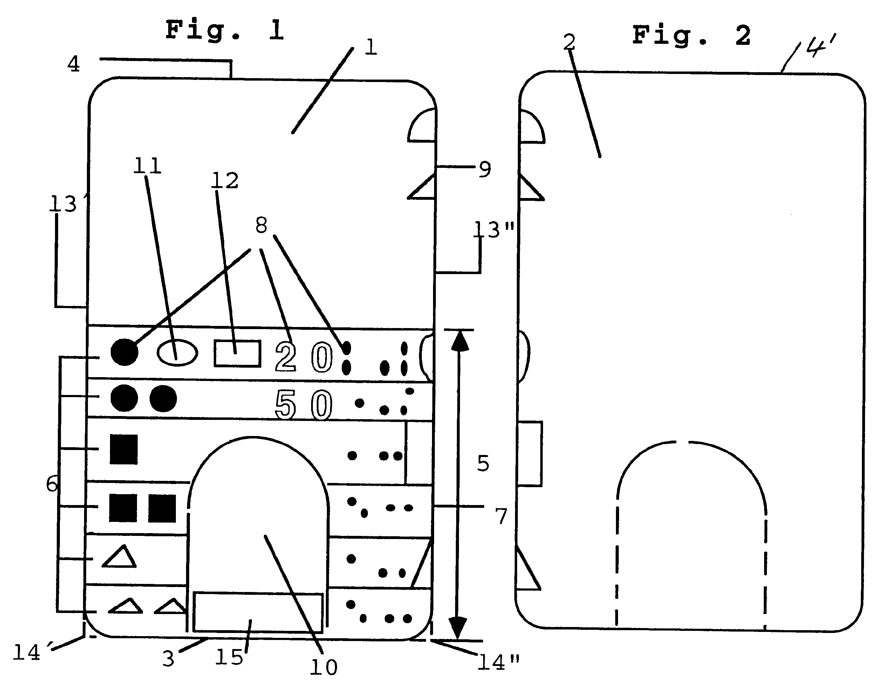

Weiters können in den Markierungsfeldern 6 noch Sensoren 12, von denen in der Fig. 1 nur einer dargestellt ist, angeordnet sein, bei denen es sich z.B. um lichtempfindliche Sensoren handeln kann. Diese ermöglichen ein Erkennen der Größe einer Banknote durch einfaches Umbiegen derselben um die Biegekante 4, wobei durch die dadurch bedingte Abschattung einer bestimmten Anzahl von Sensoren 12 die Größe der Banknote erkennbar ist.

Diese Sensoren 12 sind ebenfalls mit einer nicht dargestellten Auswerteschaltung verbunden, die einen Schallgeber steuert.

In der Fig. 1 ist als eine weitere Möglichkeit die Anordnung von Drucktasten 11, die z.B. als Folienschalter ausgebildet sein können, in den Markierungsfeldern 6 angedeutet, die ebenfalls mit einer nicht dargestellten, einen Schallgeber steuernden Auswerteschaltung verbunden sind. Dabei kann der Benutzer die erste Drucktaste 11, die bei um die Biegekante 4 umgebogener Banknote frei bleibt, drücken.

Grundsätzlich genügt es die Markierungsfelder entweder mit Markierungen, Meßkanten od. dgl. taktil erfaßbaren Symolen zu versehen, oder in diesen lediglich Sensoren 12 oder Drucktasten anzuordnen.

## Patentansprüche

1. Vorrichtung zur Klassifizierung von Banknoten und anderen Blättern aus Papier, Kunststoff, Metall, od. dgl. mit mindestens zwei zueinander parallelen Kanten, bei welcher Vorrichtung ein Anschlag (3') für eine der beiden Kanten des zu klassifizierenden Blattes vorgesehen und Anzeige- und Meßeinrichtungen (6,7,8,9) zur Ermittlung des Abstandes zur anderen der gegenüberliegenden parallelen Kanten vorhanden sind, **dadurch** **gekennzeichnet,** daß die Vorrichtung aus mindestens einem blattförmigen Körper (1) besteht, der eine zum Anschlag (3') parallele Biegekante (4) aufweist, um die das zu prüfende Blatt umschlagbar ist.

2. Vorrichtung nach Anspruch 1, **dadurch** **gekennzeichnet**, daß zwei Körper (1, 2) vorgesehen sind, die entlang eines parallel zur Biegekante eines der beiden Körper verlaufenden Gelenkes (3) miteinander verbunden sind, das gleichzeitig den Anschlag bildet und die beiden Körper in der Gebrauchstellung einen Spalt begrenzen.

3. Vorrichtung nach einem der Ansprüche 1 oder 2, **dadurch ge****kennzeichnet**, daß mehrere Anschläge, sowie mehrere Biegekanten (4) vorhanden sind.

4. Vorrichtung nach einem der Ansprüche 1 bis 3, **dadurch gekennzeichnet**, daß sich auf der Außenseite jenes Körpers (1, 2), auf dem sich zur Klassifizierung der jeweiligen Banknote eine korrespondierende Biegekante (4) befindet, Markierungsfelder (6) und/oder Beschriftungen (8) angeordnet sind, wobei sich vorzugsweise der Bereich (5) der Anzeige- und Meßeinrichtungen über das Gelenk (3) hinweg auch auf die Rückseite der Vorrichtung erstreckt.

5. Vorrichtung nach einem der Ansprüche 1 bis 4 zur Bestimmung des Wertes einer Banknote an Hand ihrer Abmessungen, **da****durch gekennzeichnet**, daß die Markierungsfelder (6) sowohl eine mit dem Niveau der Außenseite des Körpers korrespondierende (glatte) Oberfläche wie auch eine von diesem ab weichende, durch Erhebungen und Einkerbungen gekennzeichnete Oberfläche aufweisen kann und die Markierungsfelder (6) wie auch die Beschriftungen (8) parallel zur Biegekante (4), wie auch zum Gelenk (3) verlaufen.

6. Vorrichtung nach einem der Ansprüche 1 bis 5, **dadurch gekennzeichnet**, daß sich auf der Außenkante des einen oder beider Körper innerhalb wie auch außerhalb des Bereiches der Anzeige- und Meßeinrichtungen (5) eine oder mehrere Meßkanten (7, 9) mit Erhebungen und Einkerbungen befinden.

7. Vorrichtung nach einem der Ansprüche 1 bis 6, **dadurch** **gekennzeichnet**, daß sich in den Markierungsfeldern (6) Beschriftungen in erhaben dargestellter normaler oder abgekürzter Brailleschrift, in erhaben oder versenkt dargestellten Symbolen und in gedruckter Form befinden, wobei sowohl die Markierungsfelder (6) wie auch die Beschriftungen (8) in unterschiedlichen Farben ausgeführt sein können.

8. Vorrichtung nach einem der Ansprüche 1 bis 7, **dadurch** **gekennzeichnet**, daß im Bereich des Gelenkes eine Ausnehmung (10) angeordnet ist, die eine taktile oder visuelle Kontrolle des ordnungsgemäßen Anliegens einer der beiden parallelen Kanten des zu klassifizierenden Blattes an der Innseite des Gelenkes, das als Anschlag dient, erlaubt.

9. Vorrichtung nach einem der Ansprüche 1 bis 8, **dadurch gekennzeichnet**, daß die Vorrichtung insgesamt, oder aber zumindest der größere der beiden Körper (1, 2) im wesentlichen eine Größe aufweist, die der Abmessung von Scheckkarten entspricht.

10. Vorrichtung nach einem der Ansprüche 1 bis 9, **dadurch** **ge****kennzeichnet,** daß der Abstand zwischen dem oder einem der Gelenk(e) zur Biegekante (4) oder aber zu einer Nichtbiegekante (4') genau der halben Länge oder der Breite einer bestimmten Banknote entspricht.

11. Vorrichtung nach einem der Ansprüche 1 bis 10, **dadurch** **gekennzeichnet**, daß die Meßeinrichtungen durch Sensoren (12) gebildet sind, die mit einer Auswerteschaltung verbunden sind, die eine akustische Anzeige steuert.

12. Vorrichtung nach Anspruch 11, **dadurch gekennzeichnet**, daß es sich bei den Sensoren (12) um lichtempfindliche Sensoren handelt, die in einem von der zu prüfenden Banknote od. dgl. überdeckbaren Bereich angeordnet sind.

13. Vorrichtung nach Anspruch 11, **dadurch** **gekennzeichnet**, daß es sich bei den Sensoren (12) um druckempfindliche Sensoren handelt, die vorzugsweise auf größere Drücke ansprechen und in Form schmaler Streifen im von der zu prüfenden Banknote od. dgl. überdeckbaren Bereich angeordnet sind.

14. Vorrichtung nach einem der Ansprüche 11 bis 13, **dadurch** **gekennzeichnet**, daß im Bereich der Ausnehmung (10) ein lichtempfindlicher Sensor (15) angebracht ist, der mit der Auswerteschaltung verbunden ist und eine akustische Anzeige steuert, die die korrekte Lage des Blattes an dem Anschlag anzeigt.

15. Vorrichtung nach einem der Ansprüche 1 bis 14, **dadurch** **ge****kennzeichnet,** daß die Anzeige- und Meßeinrichtungen quer über die gesamte Breite des Körpers (1, 2) und parallel zur Biegekante (4) verlaufen.

16. Vorrichtung nach einem der Ansprüche 1 bis 15, **dadurch** **gekennzeichnet**, daß mehrere die Körper (1, 2) verbindende Gelenke vorgesehen sind.

## Claims

1. An apparatus for classifying banknotes and other sheets made from paper, plastic, metal or the like, having at least two edges parallel to each other and further being provided with a detent (3') for one of the two edges of the sheet to be classified and display and measuring devices (6, 7, 8, 9) for determining the distance to the other of the opposing parallel edges of the sheet, characterized in that the apparatus consists of at least one sheet-like body (1) having a bending edge (4) around which the sheet is folded, said edge being parallel to said detent (3')

2. An apparatus as claimed in claim 1, characterized in that two bodies (1,2) are provided which are connected to one another along a joint (3) extending parallel to the bending edge of one of the two bodies, which joint simultaneously forms the detent, and that the two bodies in the working position delimit a gap.

3. An apparatus as claimed in one of the claims 1 or 2, characterized in that several detents as well as several bending edges (4) are provided.

4. An apparatus as claimed in one of the claims 1 to 3, characterized in that on the outer side of the body (1,2) on which a corresponding bending edge (4) is disposed for classifying the respective banknote, fields of markings (6) and/or inscriptions (8) are provided, whereby the zone (5) of the display and measuring devices may also extend beyond the joint (3) to the reverse side of the apparatus.

5. An apparatus as claimed in one of the claims 1 to 4 for determining the value of a banknote on the basis of its size, characterized in that the fields of markings (6)both comprise a surface (smoothly) corresponding with the level of the outer side of the body and such a surface deviating from said smooth surface and comprising projections and grooves, and that said fields of markings (6) as well as said inscriptions (8) extend parallel both to the bending edge (4) and the joint (3).

6. An apparatus as claimed in one of the claims 1 to 5, characterized in that on the outer edge of the one or of both of the bodies, both within and outside of the zone (5) of the display and measuring devices, one or several measuring edges (7, 9) with projections and grooves are provided.

7. An apparatus as claimed in one of the claims 1 to 6, characterized in that in the fields of markings (6) inscriptions are provided in projected normal or abbreviated braille print, in symbols either displayed in a projected or recessed manner and in printed form, whereby both the fields of markings (6) and the inscriptions (8) may be provided in various colours.

8. An apparatus as claimed in one of the claims 1 to 7, characterized in that within the area of the joint a recess (10) is provided for allowing the visual or tactile checking of the proper fit of one of the two parallel edges of the sheet to be classified on the respective inner side of the joint which is used as the detent.

9. An apparatus as claimed in one of the claims 1 to 8, characterized in that the apparatus in total, or at least the larger of the two bodies (1, 2), is of a size which is substantially equivalent to the dimensions of a cheque card.

10. An apparatus as claimed in one of the claims 1 to 9, characterized in that the distance between the joint, or one of the joints, and the bending edge (4) or the non-bending edge (4') is precisely half the length or the width of a specific banknote.

11. An apparatus as claimed in one of the claims 1 to 10, characterized in that the measuring devices are formed by sensors (12) which are connected to an evaluation circuit controlling an acoustic display.

12. An apparatus as claimed in claim 11, characterized in that the sensors (12) are light-sensitive sensors which are arranged in a zone coverable by the banknote or the like to be tested.

13. An apparatus as claimed in claim 11, characterized in that the sensors (12) are pressure-sensitive sensors which preferably respond to higher pressures and which are arranged in form of narrow strips in the zone coverable by the banknote or the like to be tested.

14. An apparatus as claimed in one of the claims 11 to 13, characterized in that in the zone of the recess (10) there is attached a light-sensitive sensor (15) which is connected to the evaluation circuit and which controls an acoustic display which indicates the correct position of the sheet on the detent.

15. An apparatus as claimed in one of the claims 1 to 14, characterized in that the display and measuring devices extend transversally over the whole width of the body (1, 2) and parallel to the bending edge (4).

16. An apparatus as claimed in one of the claims 1 to 15, characterized in that several joints connecting the bodies (1, 2) are provided.

## Revendications

1. Dispositif pour classer des billets de banque et d'autres feuilles en papier, en matière plastique, en un métal ou analogue, comportant au moins deux bords parallèles, et dans lequel il est prévu une butée (31) pour l'un des deux bords de la feuille devant être classée et il est prévu des dispositifs d'indication et de mesure (6, 7, 8, 9) servant à déterminer la distance par rapport à l'autre des bords parallèles opposés, caractérisé en ce que le dispositif est constitué par au moins un corps en forme de feuille (1), qui comporte un bord de pliage (4) parallèle à la butée (3'), et autour duquel la feuille devant être contrôlée peut être rabattue.

2. Dispositif selon la revendication 1, caractérisé en ce qu'il est prévu deux corps (1, 2), qui sont reliés entre eux le long d'une articulation (3) qui est parallèle au bord de pliage de l'un des deux corps et forme simultanément la butée, et que dans la position d'utilisation, les deux corps délimitent une fente.

3. Dispositif selon l'une des revendications 1 ou 2, caractérisé en ce qu'il est prévu plusieurs butées ainsi que plusieurs bords de pliage (4).

4. Dispositif selon l'une des revendications 1 à 3, caractérisé en ce que des zones de marquage (6) et/ou des inscriptions (8) sont disposées sur la face extérieure de chaque corps (1,2), sur lequel le bord de pliage correspondant (4) est situé pour le classement du billet de banque respectif, la zone (5) du dispositif d'indication et de mesure s'étendant de préférence au-delà de l'articulation (3) et également sur le côté arrière du dispositif.

5. Dispositif selon l'une des revendications 1 à 4, pour la détermination de la valeur d'un billet de banque sur la base de ses dimensions, caractérisé en ce que les zones de marquage (6) peuvent comporter aussi bien une surface (lisse) qui correspond au niveau de la face extérieure du corps, qu'une surface qui s'écarte de la précédente et est caractérisée par des bossages et des encoches, et que les zones de marquage (6) ainsi que les inscriptions (8) sont disposées parallèlement au bord de pliage (4) ainsi qu'à l'articulation (3).

6. Dispositif selon l'une des revendications 1 à 5, caractérisé en ce qu'un ou plusieurs bords de mesure (7,9) comportant des bossages et des encoches sont situés sur le bord extérieur de l'un ou des deux corps aussi bien à l'intérieur qu'à l'extérieur de la zone des dispositifs d'indication et de mesure (5).

7. Dispositif selon l'une des revendications 1 à 6, caractérisé en ce que les inscriptions réalisées selon une écriture en Braille normale ou raccourcie, représentée en surélévation, comportant des symboles représentés en surélévation ou en creux et sous forme imprimée sont situées dans les zones de marquage (6), les zones de marquage (6) ainsi que les inscriptions (8) pouvant être réalisées en des couleurs différentes.

8. Dispositif selon l'une des revendications 1 à 7, caractérisé en ce que dans la zone de l'articulation est disposé un évidement (10), qui permet un contrôle tactile ou visuel de l'application correcte de l'un des deux bords parallèles de la feuille devant être classée, sur la face intérieure de l'articulation, qui est utilisée en tant que butée.

9. Dispositif selon l'une des revendications 1 à 8, caractérisé en ce que le dispositif dans son ensemble ou bien au moins le plus étendu des deux corps (1,2) possède essentiellement une taille qui correspond à la dimension de cartes-chèques.

10. Dispositif selon l'une des revendications 1 à 9, caractérisé en ce que la distance entre la ou l'une des articulations et le bord de pliage (4) ou bien un bord sans pliage (4') correspond exactement à la moitié de la longueur ou de la largeur d'un billet de banque déterminé.

11. Dispositif selon l'une des revendications 1 à 10, caractérisé en ce que les dispositifs de mesure sont formés par des capteurs (12), qui sont reliés à un circuit d'évaluation, qui commande un dispositif d'indication acoustique.

12. Dispositif selon la revendication 11, caractérisé qu'en ce qui concerne les capteurs (12), il s'agit de capteurs photosensibles, qui sont disposés dans une zone pouvant être recouverte par le billet de banque à contrôler ou analogue.

13. Dispositif selon la revendication 11, caractérisé en ce qu'en ce qui concerne les capteurs (12), il s'agit des capteurs sensibles à la pression, qui répondent de préférence à des pressions assez intenses et sont disposées sous la forme de bandes étroites dans la zone pouvant être recouverte par le billet de banque contrôlé ou analogue.

14. Dispositif selon l'une des revendications 11 à 13, caractérisé en ce que dans la zone de l'évidement (10) est disposé un capteur photosensible (15), qui est relié au circuit d'évaluation et commande un dispositif d'indication acoustique, qui indique la position correcte du billet contre la butée.

15. Dispositif selon l'une des revendications 1 à 14, caractérisé en ce que les dispositifs d'indication et les dispositifs de mesure s'étendent transversalement sur toute la largeur du corps (1, 2) et parallèlement au bord de pliage (4).

16. Dispositif selon l'une des revendications 1 à 15, caractérisé en ce qu'il est prévu plusieurs articulations reliant les corps (1,2).
